# EUROPÄISCHE PATENTSCHRIFT

(11) **EP 0 968 096 B1**
(45) Veröffentlichungstag und Bekanntmachung des Hinweises auf die Patenterteilung: **21.11.2001**
(21) Anmeldenummer: 98919056.6
(22) Anmeldetag: 06.03.1998
(51) Int. Cl.: B60H 1/24, B60J 9/04, F24F 9/00

(54) **ANORDNUNG ZUR ERZEUGUNG VON LUFTSCHLEIERN AN TÜRÖFFNUNGEN, INSBESONDERE VON NAHVERKEHRSFAHRZEUGEN**
DEVICE FOR PRODUCING AIR CURTAINS FOR DOOR OPENINGS IN PARTICULAR IN LOCAL TRANSIT VEHICLES
DISPOSITIF POUR LA PRODUCTION DE RIDEAUX D'AIR AU NIVEAU DES OUVERTURES DE PORTES, EN PARTICULIER DE VEHICULES DE TRANSPORT SUR PETITES DISTANCES

(30) Priorität: 17.03.1997 DE 19711060
(43) Veröffentlichungstag der Anmeldung: 05.01.2000
(73) Patentinhaber: Siemens Duewag Schienenfahrzeuge GmbH, 47829 Krefeld (DE)
(72) Erfinder: GEYER, Karl-Eberhard, D-40591 Düsseldorf (DE); HENATSCH, Alfred, D-01259 Dresden (DE)
(86) Internationale Anmeldenummer: DE9800679
(87) Internationale Veröffentlichungsnummer: WO9841413

(56) Entgegenhaltungen:
- DE-A- 3 719 168
- GB-A- 1 240 261
- US-A- 3 817 160
- PATENT ABSTRACTS OF JAPAN vol. 012, no. 296 (M-731), 12. August 1988 & JP 63 074715 A (NIPPON DENSO CO LTD), 5. April 1988

## Beschreibung

Die Erfindung betrifft eine Anordnung zur Erzeugung von Luftschleiern an Türöffnungen, insbesondere von Nahverkehrsfahrzeugen, wobei der eine Barriere gegen das Eindringen von Kaltluft in den hinter der Türöffnung befindlichen Raum bildende Luftschleier eine Fläche zwischen dem bodenseitigen Ende der Türöffnung und einem oberhalb dieses bodenseitigen Endes liegenden Bereich überdeckt.

Es ist allgemein bekannt, daß Luftschleier zum Vermeiden des Eindringens von Kaltluft in beheizte bzw. klimatisierte Räume verwendet werden (siehe z.B. US-A-3 817 160). Derartige Luftschleier sind vor allem bei öffentlichen Gebäuden anzutreffen, zu denen beispielsweise Warenhäuser gehören. Ein Nachteil bisheriger Anordnungen liegt darin, daß sie einen Luftschleier über die gesamte Höhe der Türöffnung legen. Dadurch sind sehr große Luftmengen erforderlich, deren Erzeugung auf Fahrzeugen nur schwer oder nicht möglich ist. Nachteilig ist außerdem, daß durch die notwendigen hohen Strömungsgeschwindigkeiten Belästigungen für die durch die Türöffnung gehenden Personen entstehen. Mit einer solchen Anordnung wäre bei Fahrzeugen weiterhin nachteilig, daß der erzeugte Luftstrom aufgrund der zur Verfügung stehenden Einbauräume nur von oben nach unten gerichtet werden kann, was zu Belästigungen durch möglicherweise aufgewirbelten Straßenstaub führen könnte. Ein weiterer Nachteil der bisher üblichen Anordnungen ist ihre durch die großen transportierten Luftmengen nicht auszuschließende Lärmbelästigung.

Der Erfindung liegt die Aufgabe zugrunde, eine Anordnung der gattungsgemäßen Art im Hinblick auf möglichst geringen baulichen Aufwand und gerade bei Fahrzeugen knappen Einbauraum so auszubilden, daß ein als unangenehm empfundenes Eindringen von Kaltluft durch die Türöffnung zuverlässig verhindert wird, wobei die Anordnung mit kleineren Luftmengen und weitestgehend frei von Geräuschentwicklungen und Staubaufwirbelungen arbeiten soll.

Diese Aufgabe wird erfindungsgemäß dadurch gelöst, daß der Luftschleier oberhalb des bodenseitigen Endes der Türöffnung auf eine Höhenlage zwischen wenigstens einem Drittel und höchstens der Hälfte der Gesamthöhe der Türöffnung begrenzt ist.

Im Gegensatz zu bisherigen Lösungen, bei denen ein Luftschleier über die gesamte Höhe der Türöffnung gelegt wird, ist nach der Erfindung nur ein Luftschleier bis zu. einer Maximalhöhe von etwa der Hälfte der Türöffnungshöhe notwendig. Durch Versuche anhand eines Fahrzeuges mit einer 200 cm hohen Türöffnung hat sich bestätigt, daß ein Luftschleier von etwa 80 cm Höhe innerhalb der Türöffnung eine wirksame Trennlinie für das Eindringen von Kaltluft beinhaltet. Eine Anwendung der Erfindung bietet sich vor allem an bei Nahverkehrsfahrzeugen, wie Stadtbahnwagen und Omnibussen, deren Einstiegstüren häufiger und oftmals relativ lange geöffnet werden, wobei dennoch ein behagliches Innenraumklima bestehen bleibt.

Vorteilhafte Ausgestaltungen der Erfindung sind in den Unteransprüchen angegeben. Der Luftschleier wird bevorzugt durch seitlich neben der Türöffnung plazierte Düsensysteme erzeugt und hat damit einen horizontalen Verlauf (Anspruch 2), wodurch z. B. Staubaufwirbelungen vermieden sind. In Abhängigkeit von den räumlichen Einbauverhältnissen und der Breite der Türöffnung kann der Luftschleier durch ein links und/oder rechts neben der Türöffnung angeordnetes Düsensystem erzeugt werden (Anspruch 3). Weiter empfiehlt es sich, den Luftschleier lediglich bei geöffneter Tür zu erzeugen, d. h., bei einem Fahrzeug nur in dessen Stillstand (Anspruch 4). Um den Luftschleier auf einfache Weise ohne zusätzliche Baugruppen erzeugen zu können, wird vorgeschlagen, eine innerhalb eines Gebäudes oder Fahrzeuges bereits vorhandene Einrichtung zur Luftaufbereitung einzusetzen (Anspruch 5). Diese Einrichtung zur Luftaufbereitung sollte praktischerweise mit einer fernbedienbaren Luftumlenkung - beispielsweise einer Leitklappe - ausgestattet sein, die funktionell mit der Türsteuerung gekoppelt ist (Anspruch 6). Insbesondere für den Fall, daß ein Gebäude oder Fahrzeug nicht bereits über eine Einrichtung zur Luftaufbereitung verfügt, wird zur Ausbildung des Luftschleiers ein kompakter Luftstromerzeuger vorgesehen, z. B. ein kleines Umluftgebläse (Anspruch 7), das entweder nur bei geöffneter Tür eingeschaltet wird oder ständig einen auf den unteren Abschnitt der Türöffnung gerichteten Heißluftmassenstrom erzeugt (Anspruch 8).

Im weiteren wir die Erfindung anhand von Ausführungsbeispielen näher erläutert, die in der Zeichnung jeweils schematisch dargestellt sind.

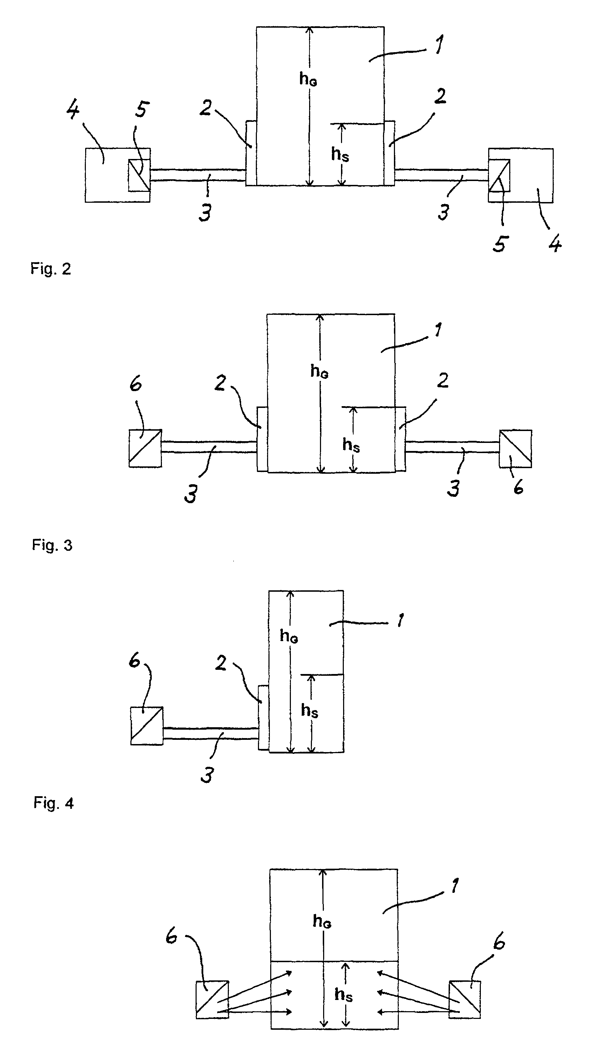

Fig. 1 zeigt die Anordnung von zwei Düsensystemen 2 an einer Türöffnung 1 eines Fahrzeugs, die eine Gesamthöhe h_{G} von z. B. 200 cm aufweist. Die Düsensysteme 2 können einfach und ggf. auch nachträglich in übliche Türsäulenverkleidungen eingebaut werden. Der zur Erzeugung des Luftschleiers mit einer Höhe h_{S} von beispielsweise 80 cm innerhalb der Türöffnung 1 erforderliche Luftstrom wird einer Luftaufbereitungsanlage 4 (Lüftungsgerät) entnommen, die in der Regel unterhalb eines Fahrgastsitzes angeordnet ist und der Heizung des Innenraumes dient. Eine in die Luftaufbereitungsanlage 4 integrierte Leitklappe 5 zur Luftumlenkung, die elektrisch betätigbar und von der Steuerung her mit dem Türöffnungssignal synchronisiert ist, leitet den Luftstrom bei geöffneter Tür über einen Luftschlauch 3 zu dem jeweiligen Düsensystem 2.

Fig. 2 zeigt eine Anordnung, die mit separaten kleinen Umluftgebläsen 6 arbeitet. Diese Umluftgebläse 6 werden über das Türöffnungssignal synchronisiert eingeschaltet und beim Schließen der Tür wieder ausgeschaltet.

In Fig. 3 ist eine Anordnung mit nur einem Düsensystem 2 dargestellt. Diese Anordnung kommt vor allem bei geringen Türbreiten oder bei Platzmangel für ein sowohl links als auch rechts neben der Türöffnung 1 plaziertes Düsensystem in Betracht.

Die in Fig. 4 gezeigte Anordnung arbeitet ebenfalls mit Umluftgebläsen 4, deren Heißluftmassenstrom - veranschaulicht durch die Pfeillinien - ständig auf den unteren Abschnitt der Türöffnung 1 ausgerichtet ist.

### Liste der Bezugszeichen

- 1: Türöffnung
- 2: Düsensystem
- 3: Luftschlauch
- 4: Einrichtung zur Luftaufbereitung (Lüftungsgerät)
- 5: gesteuerte Leitklappe (fernbedienbare Luftumlenkung)
- 6: Luftstromerzeuger (Umluftgebläse)
- h_{G}: Gesamthöhe der Türöffnung
- h_{S}: Höhenlage des Luftschleiers (Trennlinie).

## Patentansprüche

1. Anordnung zur Erzeugung von Luftschleiern an Türöffnungen (1), insbesondere von Nahverkehrsfahrzeugen, wobei der eine Barriere gegen das Eindringen von Kaltluft in den hinter der Türöffnung (1) befindlichen Raum bildende Luftschleier eine Fläche zwischen dem bodenseitigen Ende der Türöffnung (1) und einem oberhalb dieses bodenseitigen Endes liegenden Bereich überdeckt, **dadurch gekennzeichnet, daß** der Luftschleier oberhalb des bodenseitigen Endes der Türöffnung (1) auf eine Höhenlage (h_{S}) zwischen wenigstens einem Drittel und höchstens der Hälfte der Gesamthöhe (h_{G}) der Türöffnung begrenzt ist.

2. Anordnung nach Anspruch 1, **dadurch gekennzeichnet, daß** der Luftschleier durch ein seitlich neben der Türöffnung (1) plaziertes Düsensystem (2) erzeugt wird und damit einen horizontalen Verlauf hat.

3. Anordnung nach Anspruch 2, **dadurch gekennzeichnet, daß** der Luftschleier durch ein links und/oder rechts neben der Türöffnung (1) angeordnetes Düsensystem (2) erzeugt wird.

4. Anordnung nach einem der Ansprüche 1 bis 3, **dadurch gekennzeichnet, daß** der Luftschleier lediglich bei geöffneter Tür erzeugt wird, d. h., bei einem Fahrzeug nur in dessen Stillstand.

5. Anordnung nach einem der Ansprüche 1 bis 4, **dadurch gekennzeichnet, daß** zur Erzeugung des Luftschleiers eine innerhalb eines Gebäudes oder Fahrzeuges bereits vorhandene Einrichtung zur Luftaufbereitung (4) eingesetzt wird.

6. Anordnung nach Anspruch 4 oder 5, **dadurch gekennzeichnet, daß** die Einrichtung zur Luftaufbereitung (4) mit einer fernbedienbaren Luftumlenkung - beispielsweise einer Leitklappe (5) - ausgestattet ist, wobei diese Luftumlenkung funktionell mit der Türsteuerung gekoppelt ist.

7. Anordnung nach einem der Ansprüche 1 bis 4, **dadurch gekennzeichnet, daß** zur Ausbildung des Luftschleiers ein kompakter Luftstromerzeuger vorgesehen ist, z. B. ein kleines Umluftgebläse (6).

8. Anordnung nach Anspruch 7, **dadurch gekennzeichnet, daß** der Luftstromerzeuger (Umluftgebläse 6) entweder nur bei geöffneter Tür eingeschaltet wird oder ständig einen auf den unteren Abschnitt der Türöffnung (1) gerichteten Heißluftmassenstrom erzeugt.

## Claims

1. An arrangement for generating air curtains at door openings (1), in particular in local transit vehicles, in which the air curtain forming a barrier against penetration of cold air into the area behind the door opening (1) covers an area between the bottom end of the door opening (1) and a region above this bottom end, **characterised in that** the. air curtain above the bottom end of the door opening (1) is limited to a height (h_{S}) of between at least a third and at most half of the total height (h_{G}) of the door opening.

2. An arrangement according to Claim 1, **characterised in that** the air curtain is generated by a nozzle system (2) positioned laterally next to the door opening (1) and thus has a horizontal course.

3. An arrangement according to Claim 2, **characterised in that** the air curtain is generated by a nozzle system (2) arranged on the left and/or on the right next to the door opening (1).

4. An arrangement according to one of Claims 1 to 3, **characterised in that** the air curtain is only generated when the door is open, i.e. in the case of a vehicle, only when the vehicle is stopped.

5. An arrangement according to one of Claims 1 to 4, **characterised in that** an air-conditioning device (4) already present inside a building or vehicle is used to generate the air curtain.

6. An arrangement according to one of Claim 4 or 5, **characterised in that** the air-conditioning device (4) is equipped with a remotely controlled air return, for example a guide vane (5), this air return being functionally coupled to the door control.

7. An arrangement according to one of Claims 1 to 4, **characterised in that** a compact air-flow generator, e.g. a small recirculated-air blower (6), is provided to form the air curtain.

8. An arrangement according to Claim 7, **characterised in that** the air-flow generator (recirculated-air blower 6) is either switched on only when the door is open, or continuously generates a mass flow of hot air directed on to the lower section of the door opening (1).

## Revendications

1. Dispositif pour produire des rideaux d'air au niveau des ouvertures de portes (1), notamment de véhicules de transport sur de petites distances, sachant que le rideau d'air formant une barrière pour empêcher la pénétration de l'air froid se trouvant derrière l'ouverture de porte (1) recouvre une surface comprise entre l'extrémité de l'ouverture de porte (1) qui est située du côté du sol et une zone située au-dessus de cette extrémité située du côté du sol, **caractérisé en ce que** le rideau d'air est limité au-dessus de l'extrémité de l'ouverture de porte (1) située du côté du sol à une hauteur (h_{S}) comprise entre au moins un tiers et au plus la moitié de la hauteur totale (h_{G}) de l'ouverture de porte.

2. Dispositif selon la revendication 1, **caractérisé en ce que** le rideau d'air est produit par un système de buses (2) placé latéralement, à côté de l'ouverture de porte (1) et a ainsi un tracé horizontal.

3. Dispositif selon la revendication 2, **caractérisé en ce que** le rideau d'air est produit par un système de buses (2) placé à gauche et/ou à droite de l'ouverture de porte (1).

4. Dispositif selon l'une des revendications 1 à 3, **caractérisé en ce que** le rideau d'air n'est produit que lorsque la porte est ouverte, c'est-à-dire pour un véhicule uniquement lorsque celui-ci est à l'arrêt.

5. Dispositif selon l'une des revendications 1 à 4, **caractérisé en ce que**,-pour produire le rideau d'air, on utilise un dispositif de conditionnement d'air (4) déjà présent à l'intérieur d'un bâtiment ou d'un véhicule.

6. Dispositif selon la revendication 4 ou 5, **caractérisé en ce que** le dispositif de conditionnement d'air (4) est équipé d'un déflecteur d'air télécommandé, par exemple un clapet déflecteur (5), sachant que ce déflecteur est couplé de manière fonctionnelle à la commande de la porte.

7. Dispositif selon l'une des revendications 1 à 4, **caractérisé en ce que** pour former le rideau d'air est prévu un générateur de courant d'air compact, par exemple un petit ventilateur (6).

8. Dispositif selon la revendication 7, **caractérisé en ce que** le générateur de courant d'air (ventilateur 6) soit ne s'enclenche que lorsque la porte est ouverte, soit produit en permanence un courant d'air chaud dirigé vers la partie inférieure de l'ouverture de porte (1).
